# EUROPÄISCHE PATENTSCHRIFT

(11) **EP 3 392 738 B1**
(45) Veröffentlichungstag und Bekanntmachung des Hinweises auf die Patenterteilung: **18.08.2021**
(21) Anmeldenummer: 18164993.0
(22) Anmeldetag: 29.03.2018
(51) Int. Cl.: G06F 3/00, G06F 3/01, A47L 11/40, G05D 1/00, G06F 1/16, A47L 9/28, G06F 3/03

(54) **VERFAHREN ZUM BETRIEB EINES SICH SELBSTTÄTIG FORTBEWEGENDEN FAHRZEUGS**
METHOD FOR OPERATING AN AUTOMATICALLY MOVING VEHICLE
PROCÉDÉ DE FONCTIONNEMENT D'UN VÉHICULE EN MOUVEMENT DE MANIÈRE AUTOMATIQUE

(30) Priorität: 18.04.2017 DE 102017108194
(43) Veröffentlichungstag der Anmeldung: 24.10.2018
(73) Patentinhaber: Vorwerk & Co. Interholding GmbH, 42275 Wuppertal (DE)
(72) Erfinder: HILLEN, Lorenz, 42287 Wuppertal (DE)
(74) Vertreter: Müller, Enno

(56) Entgegenhaltungen:
- DE-A1-102012 109 004
- US-A1- 2014 092 139
- US-A1- 2016 283 105

## Beschreibung

### Gebiet der Technik

Die Erfindung betrifft ein Verfahren zum Betrieb eines sich selbsttätig innerhalb einer Umgebung fortbewegenden, unbemannten Fahrzeugs, insbesondere eines Reinigungsroboters, wobei das Fahrzeug innerhalb der Umgebung befindliche Hindernisse und/oder Personen detektiert, wobei einem Nutzer Informationen auf einem in Bezug auf eine Darstellungsebene während eines Betriebs des Fahrzeugs üblicherweise horizontal ausgerichteten Display des Fahrzeugs angezeigt werden, wobei bei Detektion einer Anwesenheit eines Nutzers eine räumliche Position des Nutzers relativ zu dem Fahrzeug ermittelt wird.

Des Weiteren betrifft die Erfindung ein sich selbsttätig innerhalb einer Umgebung fortbewegendes, unbemanntes Fahrzeug, insbesondere eines Reinigungsroboter, mit einer Bilderfassungseinrichtung zur Detektion von innerhalb der Umgebung befindlichen Hindernissen und/oder Personen, wobei das Fahrzeug ein in Bezug auf eine Darstellungsebene während eines Betriebs des Fahrzeugs üblicherweise horizontal ausgerichtetes Display zur Anzeige von Informationen aufweist, sowie eine Recheneinrichtung, welche eingerichtet ist, bei Detektion einer Anwesenheit eines Nutzers eine räumliche Position des Nutzers relativ zu dem Fahrzeug zu ermitteln.

### Stand der Technik

Sich selbsttätig fortbewegende Fahrzeuge sind im Stand der Technik bekannt. Ein als Reinigungsroboter ausgebildetes Fahrzeug zeigt bspw. die Druckschrift DE 10 2012109 004 A1. Beschrieben ist dort ein Reinigungsroboter mit einer Mensch-Maschine-Schnittstelle, welche ein an einem Gehäuse des Reinigungsroboters ausgebildetes Display aufweisen kann. Auf diesem Display können Informationen über einen Bearbeitungsvorgang des Reinigungsroboters dargestellt werden, u.a. auch Informationen betreffend eine Reinigungsumgebung.

Des Weiteren ist es u.a. bspw. auch aus den Druckschriften DE 10 2008 014 912 A1 und DE 10 2011 000 250 A1 bekannt, sich selbsttätig fortbewegende Fahrzeuge, wie Reinigungsroboter mit einer Detektionseinrichtung auszustatten, welche Hindernisse innerhalb der Umgebung des Reinigungsroboters detektieren kann. Beim Befahren eines Teilbereiches der Umgebung, bspw. eines Raumes einer Wohnung, misst die Detektionseinrichtung Entfernungen zu Hindernissen, welche als Grundlage für die Erstellung einer Umgebungskarte dienen. Abhängig von einem gemessenen Abstand zu einem Hindernis kann das Fahrzeug durch angemessene Rangier- und Ausweichbewegung reagieren, um nicht mit den Hindernissen zu kollidieren.

Im Stand der Technik sind des Weiteren unterschiedliche Arten von Detektionseinrichtungen für Reinigungsroboter bekannt, bspw. Ultraschallsensoren, Kontaktsensoren, Kamerasysteme und dergleichen.

Informationen, die den Betrieb des Fahrzeugs, Merkmale der Umgebung oder auch Auswahlmöglichkeiten für den Betrieb des Fahrzeugs betreff fen, werden im Stand der Technik mit einer festen Darstellungsrichtung auf dem Display des Fahrzeugs angezeigt. Üblicherweise ist die Darstellungsrichtung so, dass ein Nutzer die Informationen, insbesondere Textinformationen, optimal lesen kann, wenn er sich - bezogen auf eine Hauptfortbewegungsrichtung des Fahrzeugs - vor dem Fahrzeug befindet.

Die geschilderte Darstellungsrichtung ist für den Nutzer des Fahrzeugs jedoch unkomfortabel, wenn bspw. eine Bedienung des Fahrzeugs von einer Fahrzeugseite aus oder von hinten erfolgen soll.

Daneben sind aus den Dokumenten US 2016/0283105 A1 und US 2014/0092139 A1 mobile Geräte, sogenannte Smart-Devices, bekannt, deren Informationsanzeige auf dem Display sich in Abhängigkeit von einer Interaktionsrichtung des Nutzers relativ zu dem Gerät ändert. Beispielsweise wird vorgeschlagen, dass sich die Orientierung von angezeigten Informationsinhalten in Abhängigkeit von einer Winkelstellung einer Hand des Nutzers bei Berührung des Displays ändert, beziehungsweise, dass ein Blickwinkel des Nutzers auf das Gerät beziehungsweise auf das Display detektiert und für eine Orientierung der Darstellung von Informationen auf dem Display ausgewertet wird.

### Zusammenfassung der Erfindung

Es ist Aufgabe der Erfindung, ein Verfahren zum Betrieb eines sich selbsttätig fortbewegenden Fahrzeugs bzw. ein solches sich selbsttätig fortbewegendes Fahrzeug zu schaffen, bei welchem die Bedienbarkeit des Fahrzeugs optimiert ist, insbesondere auch bei einer Bedienung von unterschiedlichen Seiten des Fahrzeugs aus.

Zur Lösung der vorgenannten Aufgabe wird zunächst vorgeschlagen, dass eine Orientierung der angezeigten Informationen in Abhängigkeit von der ermittelten räumlichen Position des Nutzers variiert wird, wobei die Darstellung der Informationen auf dem Display vorsorglich angepasst wird, ohne dass es erforderlich ist, dass der Nutzer sich dem Fahrzeug zuwendet oder auf das Fahrzeug blickt, wobei auf dem Display angezeigte Bedienelemente in Abhängigkeit von der räumlichen Position des Nutzers relativ zueinander umgruppiert werden.

Durch die Erfindung können die Informationen und Bedienelemente für einen Nutzer nun so auf dem Display des Fahrzeugs angezeigt werden, dass der Nutzer diese stets bequem aus seiner aktuellen Position und Orientierung heraus lesen kann, ohne sich relativ zu dem Fahrzeug bzw. dem Display bewegen und/oder drehen zu müssen. Dafür detektiert eine Detektionseinrichtung des Fahrzeugs oder auch eine relativ zu dem Fahrzeug extern angeordnete Detektionseinrichtung eine Position eines Nutzers relativ zu dem Fahrzeug. Sofern festgestellt wird, dass die aktuell auf dem Display dargestellten Informationen und Bedienelemente nicht in einer solchen Darstellungsrichtung bereitgestellt sind, welche ein (bezogen auf die Displayebene) übliches von oben nach unten Lesen der Informationen durch den Nutzer erlauben, wird die Darstellungsrichtung so geändert, dass der Nutzer die Informationen aus seiner aktuellen räumlichen Position mit einer entsprechenden Blickrichtung auf das Fahrzeug und/oder das Display ohne Änderung seiner Position bzw. Orientierung optimal lesen kann. Für ein Veranlassen einer Änderung der Darstellungsrichtung bzw. zumindest ein Überprüfen, ob eine aktuelle Darstellungsrichtung geeignet ist, reicht es als auslösendes Ereignis aus, wenn sich eine Person in der Nähe des Fahrzeugs aufhält. Dabei ist es nicht erforderlich, dass der Nutzer sich dem Fahrzeug zuwendet oder gar auf das Fahrzeug blickt. Die Darstellung der Informationen auf dem Display wird bereits vorsorglich angepasst, insbesondere für den Fall, dass die anwesende Person in Kürze eine Bedienung des Fahrzeugs durchführen möchte bzw. Informationen von dem Display ablesen möchte.

Es wird vorgeschlagen, dass die Anwesenheit des Nutzers mittels einer Bilderfassungseinrichtung detektiert wird. Die Bilderfassungseinrichtung kann besonders bevorzugt eine Kamera oder zumindest ein Kamerachip sein, deren bzw. dessen Bilddaten daraufhin analysiert werden, ob sich eine Person innerhalb des Erfassungsbereiches befindet. Mit üblichen Methoden einer Bildverarbeitung kann anhand von definierten Merkmalen entschieden werden, ob es sich bei einem Objekt um einen Gegenstand oder um eine menschliche Gestalt handelt. Sofern festgestellt wird, dass eine Person innerhalb eines definierten Umgebungsbereichs des Fahrzeugs anwesend ist, kann dann in einem weiteren Verfahrensschritt ermittelt werden, ob eine Darstellungsrichtung der Informationen auf dem Display dafür geeignet ist, dass der Nutzer ausgehend von seiner aktuellen räumlichen Position relativ zu dem Fahrzeug die auf dem Display dargestellten Informationen optimal und in üblicher Art und Weise lesen kann. Sollte dies nicht der Fall sein, wird, wie vorgeschlagen, die Orientierung der angezeigten Informationen an die ermittelte räumliche Position des Nutzers angepasst.

Insbesondere wird vorgeschlagen, dass eine Blickrichtung des Nutzers mittels eines Gesichtserkennungsverfahrens ermittelt wird. Gemäß dieser Ausgestaltung wird nicht nur eine Anwesenheit bzw. Position eines Nutzers relativ zu dem Fahrzeug ermittelt, sondern konkret auch, in welche Richtung der Nutzer aktuell blickt. Es kann insbesondere analysiert werden, ob der Nutzer auf das Fahrzeug schaut. In dem Fall, dass der Nutzer nicht in Richtung des Fahrzeugs blickt, sondern in eine davon abweichende Raumrichtung, kann vorgesehen sein, eine Darstellungsrichtung auf dem Display des Fahrzeugs nicht anzupassen. Sofern festgestellt wird, dass die Blickrichtung des Nutzers in Richtung des Fahrzeugs, insbesondere auf das Display des Fahrzeugs und/oder zu der Bilderfassungseinrichtung gewandt ist, wird eine Anpassung der Orientierung der angezeigten Informationen veranlasst. Das Gesichtserkennungsverfahren kann dabei auch beinhalten, dass die Person des Nutzers ermittelt wird, d.h., ob es sich bei dem Nutzer um einen an dem Fahrzeug registrierten Nutzer handelt, welcher auch zur Bedienung des Fahrzeugs ermächtigt ist. Wie auch durch die zuvor dargestellte, reine Ermittlung der räumlichen Position des Nutzers relativ zu dem Fahrzeug, kann auch im Rahmen der Gesichtserkennung erkannt werden, ob der Nutzer sich derzeit vor, neben oder hinter dem Fahrzeug bzw. dessen Display befindet.

Des Weiteren wird vorgeschlagen, dass eine Bedienrichtung, aus weleher der Nutzer das Fahrzeug bedient, detektiert wird. Bei dieser Ausgestaltung wird ermittelt, aus welcher Richtung der Nutzer bspw. eine Eingabeschnittstelle des Fahrzeugs, insbesondere ein Touchscreen, bedient. Die Detektion der Bedienrichtung erfordert, dass der Nutzer sich der Eingabe-Schnittstelle und/oder dem Display des Fahrzeugs mit bspw. der Hand, annähert, um in Kürze oder in dem Moment der Detektion eine Bedienung des Fahrzeugs vorzunehmen. Die Bedienrichtung kann alternativ mittels einer Bilderfassungseinrichtung detektiert werden. Ebenso können auch Kontaktsensoren verwendet werden, berührungssensitive Displays oder dergleichen.

Insbesondere wird vorgeschlagen, dass eine Orientierung einer an dem Fahrzeug angreifenden Hand des Nutzers detektiert wird. Anhand der Orientierung der Hand des Nutzers kann auf die Bedienrichtung geschlossen werden, aus welcher der Nutzer das Fahrzeug bedienen möchte bzw. bedient, und damit auch auf die aktuelle räumliche Position und Orientierung des Nutzers in der Umgebung. Bspw. nimmt die Bilderfassungseinrichtung des Nutzers ein Bild der an dem Fahrzeug angreifenden Hand oder zumindest in der Nähe des Fahrzeugs befindlichen Hand des Nutzers auf. Anschließend wird das erfasste Bild mit Hilfe einer Bildverarbeitung dahingehend ausgewertet, in welcher Orientierung die Hand zu dem Fahrzeug orientiert ist.

Insbesondere wird vorgeschlagen, dass die Orientierung der Hand mittels eines kapazitiven Sensors, insbesondere eines kapazitiven Displays, detektiert wird. Wenn sich die Hand des Nutzers auf einen kapazitiven Sensor zu bewegt, ändert sich die Kapazität und es kann auf die Anwesenheit der Hand geschlossen werden. Der kapazitive Sensor kann besonders vorteilhaft in das Display des Fahrzeugs integriert sein, nämlich in Form eines kapazitiven Touchscreens. Somit kann anhand des von dem Display gemessenen Signals erkannt werden, aus welcher Bedienrichtung der Nutzer aktuell das Fahrzeug bedient. Diejenigen Teilbereiche des Sensors bzw. des Displays, deren Kapazität erhöht ist, weisen bspw. in eine Richtung, welche als Bedienrichtung angenommen werden kann. Alternativ und/oder zusätzlich kann die Bedienrichtung bzw. Orientierung der Hand des Nutzers mittels einer Bilderfassungseinrichtung, z.B. Kamera, detektiert werden.

Des Weiteren wird vorgeschlagen, dass eine von mehreren möglichen Darstellungsrichtungen des Displays in Abhängigkeit von der ermittelten räumlichen Position des Nutzers gewählt wird. Bspw. können für die Darstellung auf dem Display mehrere Vorzugsrichtungen definiert sein. Bei einem rechteckigen Display können dies bspw. die parallel zu den Seitenkanten orientierten Darstellungsrichtungen sein, nämlich vier um 90° zueinander rotierte Darstellungsrichtungen. In dem Fall, dass diskrete Darstellungsrichtungen für die Darstellung auf dem Display definiert sind, wird vorgeschlagen, dass nach dem Bestimmen der Blickrichtung bzw. Bedienrichtung des Nutzers überprüft wird, welche Darstellungsrichtung der aktuellen Blickrichtung bzw. Bedienrichtung am nächsten liegt. Sofern keine der vordefinierten Darstellungsrichtungen des Displays parallel zu einer Blickrichtung bzw. Bedienrichtung des Nutzers orientiert ist, wird vorzugsweise diejenige Darstellungsrichtung gewählt, welche die kleinste Winkelabweichung zu der Blickrichtung bzw. Bedienrichtung aufweist. Des Weiteren kann aber auch vorgesehen sein, dass die Darstellungsrichtungen stufenlos gewählt werden können, d.h. keine diskreten Darstellungsrichtungen durch bspw. das Display vorgegeben sind. Dies ist der Fall, wenn das Display bspw. rund ausgebildet ist, so dass eine Darstellung der Informationen in jede mögliche Richtung ausgeführt werden kann, ohne dass bspw. ein Eckbereich des Informationsfeldes von der Außenkontur des Displays abgeschnitten wird. Um ein Abschneiden der Informationen durch die Kontur des Displays zu verhindern, wenn die dargestellten Informationen auf dem Display gedreht werden, kann es auch vorgesehen sein, dass die zur Orientierung stehende Darstellungsfläche des Displays größer gewählt ist als die zur Anzeige der Informationen benötigte Fläche. Bei gleichbleibender Darstellungsgröße der Informationen kann somit auch eine Ausrichtung des Displayinhalts in alle gewünschten Richtungen erfolgen.

Es wird vorgeschlagen, dass mehrere Teilbereiche der auf dem Display angezeigten Informationen und/oder auf dem Display angezeigten Bedienelemente in Abhängigkeit von der räumlichen Position des Nutzers relativ zueinander umgruppiert werden. Gemäß dieser Ausführungsform wird auf dem Display beispielsweise zumindest ein Bedienelement dargestellt, wobei eine Orientierung und/oder eine Position des Bedienelementes in Abhängigkeit von der ermittelten räumlichen Position des Nutzers relativ zu angezeigten Informationen und/oder anderen Bedienelementen variiert wird. Insbesondere kann das Bedienelement an einem dem Nutzer zugewandten Rand der Darstellungsfläche des Displays angezeigt werden, besonders bevorzugt zwischen dem dem Nutzer zugewandten Rand der Displayfläche und angezeigten Informationen. In Abhängigkeit von der räumlichen Position des Nutzers können somit auf dem Display angezeigte Informationen und/oder Bedienelemente zumindest teilweise umgruppiert werden, so dass deren Position auf der Darstellungsfläche geändert ist und so nun beispielsweise ein Teilbereich der Informationen, welcher bisher in Blickrichtung des Nutzers über einem anderen Teilbereich angeordnet war, neben diesem Teilbereich angeordnet ist. Die Bedienelemente sind auf dem Display beispielsweise nach der Art von Tastflächen dargestellt, auf welche der Nutzer drücken kann, um beispielweise eine Menüauswahl zu treffen. Die Bedienelemente können bevorzugt in einem Randbereich der Darstellungsfläche des Displays angeordnet sein, besonders bevorzugt je nach der Blickrichtung des Nutzers vor den als Text dargestellten Informationen, so dass der Nutzer bei Betätigung eines der Bedienelemente nicht die weiteren auf dem Display angezeigten Informationen mit seiner Hand verdeckt. Die Informationen können somit bevorzugt so auf dem Display arrangiert sein, dass die Bedienelemente stets in Richtung des Nutzers zeigen und sich somit zwischen den übrigen angezeigten Informationen, beispielsweise Textbestandteilen, und dem Nutzer befinden. Des Weiteren kann vorgesehen sein, dass dem Display separat, außerhalb der Darstellungsfläche, Betätigungselemente nach der Art von Tasten zugeordnet sind. Die auf dem Display dargestellten Bedienelemente können in diesem Fall Erläuterungen und/oder Beschriftungen für die zugeordneten Betätigungselemente beinhalten, so dass ein Nutzer Informationen darüber erhält, welche Funktionen hinter den Betätigungselementen stehen. Damit die Bedienelemente beispielsweise stets neben den zugeordneten Betätigungselementen verbleiben, auch wenn sich die Orientierung der Information auf dem Display ändert, können die Bedienelemente stets an demjenigen Rand der Darstellungsfläche dargestellt werden, welcher den Betätigungselementen benachbart ist.

Gemäß einer besonders bevorzugten Ausführung wird zur Durchführung des Verfahrens eine zeitlich aufeinanderfolgende Ausführung folgender Verfahrensschritte vorgeschlagen:
- Aufnahme der Umgebung des Fahrzeugs mittels einer Bilderfassungseinrichtung,
- Erkennen der Anwesenheit eines Nutzers in der Umgebung des Fahrzeugs,
- Bestimmen einer Blickrichtung und/oder einer Bedienrichtung einer Hand des Nutzers,
- Zuordnen der bestimmten Blickrichtung und/oder Bedienrichtung zu einer Darstellungsrichtung des Displays, und
- Darstellen von Informationen mit der Orientierung der zugeordneten Darstellungsrichtung.

Die vorgenannten Verfahrensschritte können zur optimalen Ausrichtung des Displayinhalts wiederholt durchlaufen werden. Zunächst wird bspw. ein Kamerabild der Umgebung des Fahrzeugs aufgenommen, anschließend eine Gesichtserkennung zur Erkennung eines Gesichtes eines Nutzers und zur Bestimmung einer Blickrichtung des Nutzers durchgeführt, wobei dann anschließend eine auf dem Display mögliche Darstellungsrichtung zugeordnet wird, die der ermittelten Blickrichtung am besten entspricht. Die auf dem Display angezeigten Informationen werden sodann entsprechend in die optimale Darstellungsrichtung gedreht, so dass der Nutzer die Informationen optimal aus seiner Blickrichtung ablesen kann.

Neben dem zuvor beschriebenen Verfahren wird mit der Erfindung des Weiteren ein sich selbsttätig innerhalb einer Umgebung fortbewegendes, unbemanntes Fahrzeug, insbesondere ein Reinigungsroboter, vorgeschlagen, wobei das Fahrzeug eine Bilderfassungseinrichtung zur Detektion von innerhalb der Umgebung befindlichen Hindernissen und/oder Personen aufweist, wobei das Fahrzeug ein in Bezug auf eine Darstellungsebene während eines Betriebs des Fahrzeugs üblicherweise horizontal ausgerichtetes Display zur Anzeige von Informationen aufweist, und wobei das Fahrzeug eine Recheneinrichtung aufweist, die eingerichtet ist, bei Detektion einer Anwesenheit eines Nutzers eine räumliche Position des Nutzers relativ zu dem Fahrzeug zu ermitteln und eine Darstellungsrichtung der auf dem Display angezeigten Informationen in Abhängigkeit von der ermittelten räumlichen Position des Nutzers zu variieren, nämlich bereits vorsorglich anzupassen, ohne dass es erforderlich ist, dass der Nutzer sich dem Fahrzeug zuwendet oder auf das Fahrzeug blickt, wobei auf dem Display angezeigte Bedienelemente in Abhängigkeit von der räumlichen Position des Nutzers relativ zueinander umgruppiert werden.

Das Fahrzeug, insbesondere ein so ausgebildeter Reinigungsroboter, ist somit geeignet, ein zuvor erläutertes Verfahren auszuführen und die auf dem Display des Fahrzeugs dargestellten Informationen so auszurichten, dass ein Nutzer diese aus seiner aktuellen Blickrichtung optimal lesen kann und/oder aus seiner aktuellen Bedienrichtung optimal bedienen kann.

Zur bestmöglichen Darstellung und Ausrichtung der Informationen auf dem Display wird insbesondere vorgeschlagen, dass das Display eine Darstellungsfläche aufweist, deren Seitenlängen mindestens so groß sind wie eine größte mögliche Diagonale der auf dem Display angezeigten Informationen, und/oder dass das Display eine runde Darstellungsfläche mit einem Durchmesser aufweist, der mindestens so groß ist wie eine Diagonale der auf dem Display angezeigten Informationen. Gemäß dieser Ausgestaltung ist das Verhältnis zwischen der gesamten Darstellungsfläche des Displays und der von den dargestellten Informationen in Anspruch genommenen Display-Teilfläche so bemessen, dass die dargestellten Informationen, auch bei einer Drehung auf dem Display nicht über den Rand der Darstellungsfläche hinausragen, so dass die Informationen vollständig angezeigt werden können, unabhängig von der aktuellen Darstellungsrichtung, und insbesondere Eckbereiche nicht abgeschnitten werden.

### Kurze Beschreibung der Zeichnungen

Im Folgenden wird die Erfindung anhand von Ausführungsbeispielen näher erläutert. Es zeigen:
- Fig. 1: ein erfindungsgemäßes sich selbsttätig fortbewegendes Fahrzeug,
- Fig. 2: eine Bediensituation des Fahrzeugs durch einen Nutzer aus einer ersten Richtung,
- Fig. 3: eine Bediensituation des Fahrzeugs durch einen Nutzer aus einer zweiten Richtung,
- Fig. 4: eine schematische Darstellung des Fahrzeugs mit unterschiedlichen räumlichen Positionen eines oder mehrerer Nutzer,
- Fig. 5: eine Prinzipskizze einer Darstellungsfläche eines Displays mit darauf angezeigten Informationen gemäß einer ersten Ausführungsform,
- Fig. 6: eine Prinzipskizze einer Darstellungsfläche eines Displays gemäß einer zweiten Ausführungsform,
- Fig. 7a, 7b, 7c: eine erste Ausführungsform eines Displays mit in unterschiedlichen Darstellungsrichtungen angezeigten Informationen,

- Fig. 8a, 8b, 8c: eine zweite Ausführungsform eines Displays mit in unterschiedlichen Darstellungsrichtungen angezeigten Informationen.

### Beschreibung der Ausführungsformen

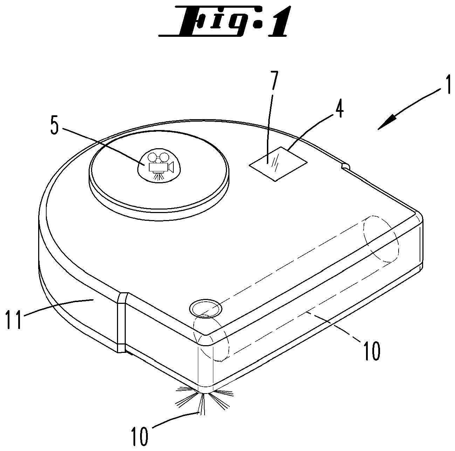

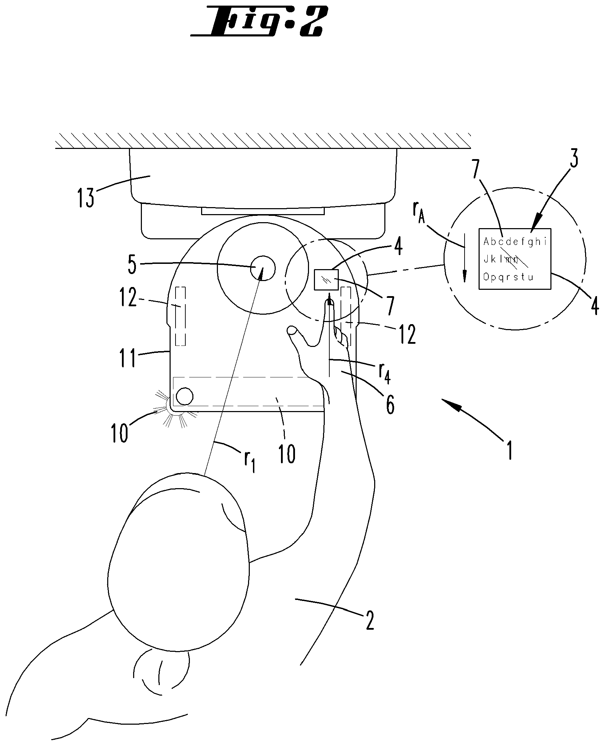

Figur 1 zeigt ein sich selbsttätig innerhalb einer Umgebung fortbewegendes Fahrzeug 1, welches hier als Saugroboter ausgebildet ist. Das Fahrzeug 1 weist ein Gehäuse 11 auf, an dessen Oberseite ein Display 4 mit einer Darstellungsfläche 7 ausgebildet ist. Des Weiteren verfügt das Fahrzeug 1 über motorisch angetriebene Räder 12 (siehe Figuren 2 bis 4) zur Fortbewegung innerhalb der Umgebung sowie über eine oder mehrere Reinigungselemente 10 zur Ausführung einer Reinigungstätigkeit. Das Fahrzeug 1 verfügt des Weiteren über eine nicht näher dargestellte Triangulations-Messeinrichtung, welche Abstandsmessungen innerhalb einer Detektionsebene über einen Winkelbereich von 360°, d.h. rund um das Fahrzeug 1, durchführen kann. Die Triangulations-Messeinrichtung weist bspw. einen Laser zur Emission eines Lichtstrahls auf. Der Lichtstrahl tritt durch eine Öffnung des Gehäuses 11 des Fahrzeugs 1 aus und scannt die Umgebung des Fahrzeugs 1 über den 360°-Winkelbereich ab. Wenn der Lichtstrahl auf ein Hindernis trifft, wird zumindest ein Anteil reflektiert und von einem Sensor der Triangulations-Messeinrichtung detektiert. Abhängig von einem Abstand zwischen der Triangulations-Messeinrichtung und dem den Lichtstrahl reflektierenden Hindernis trifft der reflektierte Anteil an einer anderen Position des Sensors auf. Anhand dieser Position kann die Entfernung des Hindernisses zu dem Fahrzeug 1 bestimmt werden. Neben der Triangulations-Messeinrichtung verfügt das Fahrzeug 1 des Weiteren über eine ebenfalls nicht dargestellte Odometrie-Messeinrichtung, welche den Rädern 12 des Fahrzeugs 1 zugeordnet ist und eine zurückgelegte Strecke sowie eine Verfahrrichtung messen kann. Das Fahrzeug 1 weist einen internen Speicher sowie eine Recheneinrichtung auf, mittels welcher aus den Messdaten eine Umgebungskarte der Umgebung des Fahrzeugs 1 erstellt werden kann. Anhand dieser Umgebungskarte kann sich das Fahrzeug 1 innerhalb der Umgebung orientieren und einen Fortbewegungspfad bspw. für eine gezielte Bodenreinigung in einer Wohnung planen. Zur Erstellung der Umgebungskarte werden die von der Odometrie-Messeinrichtung aufgenommenen Messdaten mit den Umgebungsdaten der Triangulations-Messeinrichtung verglichen. Die erstellte Umgebungskarte kann einem Nutzer des Fahrzeugs 1 dann nach Wunsch auf dem Display 4 des Fahrzeugs 1 angezeigt werden.

Zusätzlich weist das Fahrzeug 1 eine Bilderfassungseinrichtung 5, nämlich eine Kamera, auf, welche schwenkbar so angeordnet ist, dass ein Detektionsbereich der Bilderfassungseinrichtung 5 in einem 360°-Winkelbereich um das Fahrzeug 1 herumgeschwenkt werden kann. Die Bilderfassungseinrichtung 5 steht in Kommunikationsverbindung mit der Recheneinrichtung des Fahrzeugs 1, so dass die aufgenommenen Bilddaten mittels der Recheneinrichtung analysiert werden können.

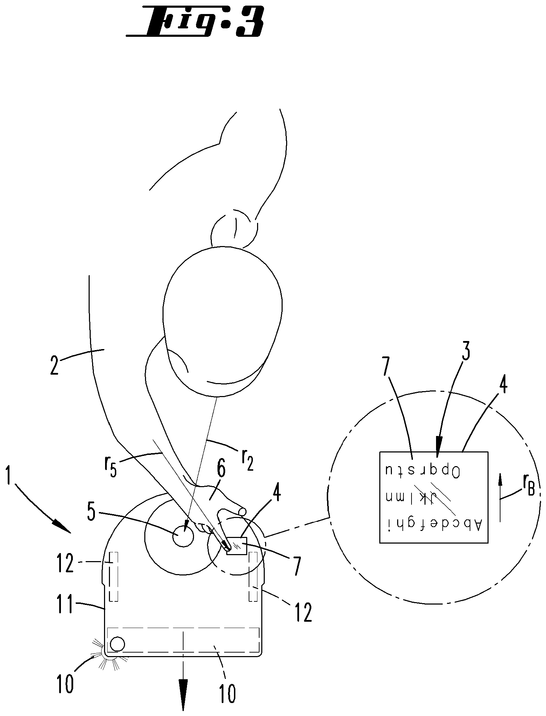

Figur 2 zeigt einen Bedienvorgang eines Nutzers 2 an dem Fahrzeug 1. Das Fahrzeug 1 ist hier bspw. zum Aufladen eines Akkumulators mit einer Basisstation 13 verbunden. In der dargestellten Raumsituation befindet sich der Nutzer 2 - bezogen auf eine übliche Hauptfortbewegungsrichtung des Fahrzeugs 1 - vor dem Fahrzeug 1, nämlich dort, wo die Reinigungselemente 10 des Fahrzeugs 1 vorauseilen. Die Reinigungselemente 10 sind hier bspw. eine elektromotorisch angetriebene Reinigungswalze sowie eine Seitenbürste. Der Nutzer 2 beabsichtigt, eine Auswahl aus auf dem Display 4 angezeigten Informationen 3 zu treffen. Bei diesen Informationen 3 kann es sich bspw. um unterschiedliche einstellbare Leistungsstufen einer Motor-Gebläse-Einheit des Fahrzeugs 1 handeln. Die Informationen 3 sind auf einer Darstellungsfläche 7 des Displays 4 in einer Darstellungsrichtung r_{A} dargestellt. Diese Darstellungsrichtung r_{A} entspricht im Wesentlichen einer aktuellen Blickrichtung r₁ des Nutzers 2 auf das Fahrzeug 1. Die Blickrichtung r₁ des Nutzers 2 kann auf unterschiedliche Teilflächen des Fahrzeugs 1 fallen, bspw. auf das Display 4, auf einen Teil des Gehäuses 11 des Fahrzeugs 1 oder in Richtung der Bilderfassungseinrichtung 5. In dem gezeigten Ausführungsbeispiel wird angenommen, dass der Nutzer 2 in Richtung der Bilderfassungseinrichtung 5 blickt, so dass die Blickrichtung r₁ entlang einer Geraden zwischen den Augen des Nutzers 2 und der Bilderfassungseinrichtung 5 verläuft. Gleichzeitig führt der Nutzer 2 seine Hand 6 in Richtung des Displays 4, wodurch sich durch die Position und Orientierung seiner Hand 6 eine Bedienrichtung r₄ definiert. Die Bedienrichtung r₄ entspricht hier der Orientierung des Zeigefingers der Hand 6. Ausgehend von der in Figur 2 dargestellten Situation, in welcher die Darstellungsrichtung r_{A} der Informationen 3 im Wesentlichen parallel zu der Blickrichtung r₁ und/oder der Bedienrichtung r₄ ausgerichtet ist, kann der Nutzer 2 das Fahrzeug 1 auch aus einer abweichenden räumlichen Position und Orientierung bedienen. Diese Situation ist in Figur 3 dargestellt.

Figur 3 zeigt das Fahrzeug 1 und den Nutzer 2 in einer Anordnung, bei welcher sich der Nutzer - bezogen auf die Hauptfortbewegungsrichtung des Fahrzeugs 1 - hinter dem Fahrzeug 1 befindet. Damit der Nutzer 2 nun auch aus dieser räumlichen Position die Informationen 3 optimal von dem Display 4 ablesen kann, insbesondere ohne sich relativ zu dem Fahrzeug 1 bewegen zu müssen, werden ausgehend von der in Figur 2 dargestellten Situation die nachfolgenden Verfahrensschritte durchgeführt.

Zunächst wendet der Nutzer 2 sich dem Fahrzeug 1 zu. Dabei blickt er auf das Fahrzeug 1, hier bspw. auf die zentral an dem Fahrzeug 1 angeordnete Bilderfassungseinrichtung 5 und führt seine Hand 6 in Richtung des Displays 4, auf welchem er eine Auswahl aus den angezeigten Informationen 3 treffen möchte. Die Blickrichtung r₂ und die Bedienrichtung r₅ sind dabei von einer Position des Nutzers 2 hinter dem Fahrzeug 1 auf das Fahrzeug 1 gerichtet. Die Bilderfassungseinrichtung 5 nimmt während des Betriebs des Fahrzeugs 1 in vordefinierten zeitlichen Abständen Bilder von der Umgebung des Fahrzeugs 1 auf. Die Bilderfassungseinrichtung 5 übermittelt die aufgenommenen Bilddaten an die Recheneinrichtung des Fahrzeugs 1, wo diese analysiert werden, insbesondere im Hinblick auf die Erkennung der Anwesenheit eines Nutzers 2 innerhalb der unmittelbaren Umgebung des Fahrzeugs 1. Die Bildverarbeitung erfolgt hier bspw. unter Anwendung eines Gesichtserkennungsverfahrens, welches zum einen ein in dem Bild dargestelltes Gesicht als solches erkennt, und zum anderen das Gesicht einem registrierten Nutzer 2 des Fahrzeugs 1 zuordnen kann. Hierzu werden die Bilddaten mit entsprechenden gespeicherten Referenzdaten verglichen. Das Gesichtserkennungsverfahren analysiert die Daten des Weiteren dahingehend, ob der Nutzer 2 aktuell auf das Fahrzeug 1 blickt, oder alternativ in eine andere, von dem Fahrzeug 1 weggewandte Richtung. Hier blickt der Nutzer 2 mit der Blickrichtung r₂ auf das Fahrzeug 1, was als Bedienungswunsch des Nutzers 2 gedeutet wird. Das als kapazitives Touchscreen ausgebildete Display 4 detektiert darüber hinaus eine Annäherung der Hand 6 des Nutzers 2 auf das Display 4 zu, woraus ebenfalls auf einen Bedienwunsch des Nutzers 2 geschlossen wird. Anhand der Kapazitätswerte der einzelnen Teilbereiche des Displays 4 erkennt die Recheneinrichtung des Fahrzeugs 1 die Bedienrichtung r₅, welche hier der Orientierung des Zeigefingers der Hand 6 des Nutzers 2 entspricht. Die Blickrichtung r₂ und die Bedienrichtung r₅ werden anschließend vektoriell verglichen und zu einem Vektor zusammengefasst, welcher einem rechnerischen Mittel der Blickrichtung r₂ und der Bedienrichtung r₅ entspricht. Der gemittelten Richtung wird anschließend eine Darstellungsrichtung r_{B} des Displays 4 zugeordnet, in welcher die auf dem Display 4 angezeigten Informationen 3 relativ zu dem Gehäuse 11 des Fahrzeugs 1 orientiert werden. Ausgehend von der in Figur 2 dargestellten Situation werden die Informationen 3 gemäß der Situation in Figur 3 um 180° rotiert, so dass der Nutzer 2 die Information 3 in üblicher Art und Weise lesen kann, ohne sich relativ zu dem Fahrzeug 1 bewegen zu müssen.

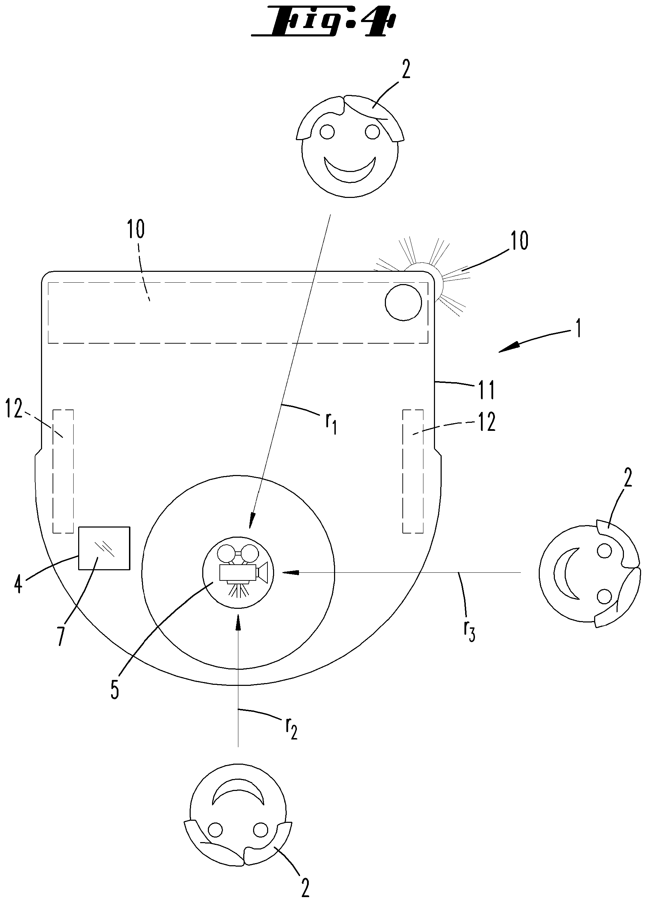

Figur 4 zeigt schematisch ein Fahrzeug 1 und unterschiedliche Blickrichtungen r₁, r₂, r₃ eines oder mehrerer Nutzer 2 auf das Fahrzeug 1. Eine erste Blickrichtung r₁ entspricht dabei der in Figur 2 dargestellten Situation, bei welcher ein Nutzer 2 von vorne auf das Fahrzeug 1 blickt. Die Blickrichtung r₂ entspricht einer Anwesenheit des Nutzers 2 hinter dem Fahrzeug 1. Diese Blickrichtung r₂ entspricht im Wesentlichen der in Figur 3 dargestellten Situation. Des Weiteren ist eine Blickrichtung r3 gezeigt, bei welcher der Nutzer 2 von einer Seite auf das Fahrzeug 1 blickt. Neben den gezeigten Blickrichtungen r₁, r₂, r₃ sind des Weiteren eine große Vielzahl anderer Blickrichtungen r₁, r₂, r₃ möglich. Durch eine Rotierbarkeit der Bilderfassungseinrichtung 5 oder durch eine Bilderfassungseinrichtung 5, die mit einer einen Erfassungswinkel aufweitenden Optik ausgestattet ist, z.B. einer Weitwinkeloptik oder Fischaugenoptik, können Positionen des Nutzers 2 rund um das Fahrzeug 1 detektiert werden. Das Display 4 weist dem gegenüber vier vordefinierte Darstellungsrichtungen r_{A}, r_{B}, r_{C} auf, in welchen Informationen 3 angezeigt werden können. Diese Darstellungsrichtungen r_{A}, r_{B}, r_{C} sind parallel zu den Seitenkanten des Displays 4 orientiert, so dass die Darstellungsfläche 7 des Displays 4 optimal ausgenutzt werden kann.

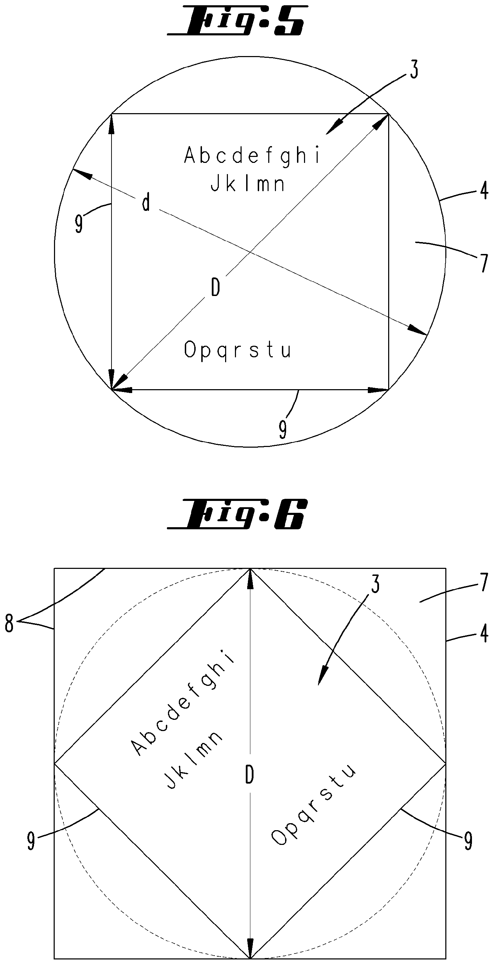

Die Figuren 5 und 6 zeigen zwei alternative Ausführungsformen eines Displays 4 des Fahrzeugs 1, bei welchen Informationen 3 in beliebigen, stufenlos wählbaren Darstellungsrichtungen r_{A}, r_{B}, rc angezeigt werden können.

Figur 5 zeigt eine Ausführungsform eines Displays 4, hier mit einer runden Darstellungsfläche 7. Die Darstellungsfläche 7 ist ausgebildet, in jedem Teilbereich Informationen 3 anzuzeigen. Die Darstellungsfläche 7 weist einen Durchmesser d auf, welcher einer Diagonalen D eines Teilbereiches entspricht, in welchem Informationen 3 angezeigt werden. Der die Informationen 3 beinhaltende Teilbereich ist quadratisch ausgebildet, wobei die Ecken des Quadrats bei einer Drehung der Informationen 3 auf dem Display 4 entlang der Umfangslinie des kreisförmigen Displays 4 verlaufen. Die Informationen 3 befinden sich unabhängig von einer aktuellen Orientierung der Informationen 3 auf dem Display 4 stets vollständig dargestellt auf der Darstellungsfläche 7.

Figur 6 zeigt ein quadratisch ausgebildetes Display 4 mit einer Darstellungsfläche 7, welche über ihre gesamte Längs- und Quererstreckung zur Darstellung von Informationen 3 genutzt werden kann. Auf der Darstellungsfläche 7 ist mittig ein ebenfalls quadratischer Bereich durch dargestellte Informationen 3 belegt, welcher in Abhängigkeit von einer detektierten räumlichen Position eines Nutzers 2 um ein Zentrum der Darstellungsfläche 7 gedreht werden kann. Die Darstellungsfläche 7 weist Seitenlängen 8 auf, welche genauso lang sind wie eine Diagonale D der durch die Informationen 3 belegten Teilfläche des Displays 4. Die von den Informationen 3 belegte Teilfläche weist eine maximale Seitenlänge 9 auf. Da die Informationen 3 ebenfalls eine quadratische Fläche belegen, sind alle Seitenlängen 9 gleich groß. Bei einer Änderung der Orientierung der angezeigten Informationen 3 bewegen sich die Ecken des Quadrats auf einer Kreisbahn (gestrichelt dargestellt). Diese Kreisbahn ist in die Darstellungsfläche 7 eingeschrieben, so dass sich auch die äußersten Eckbereiche der dargestellten Informationen 3 stets innerhalb der Darstellungsfläche 7 befinden und somit keine Informationen 3 bei der Änderung der Orientierung der Informationen 3 abgeschnitten werden.

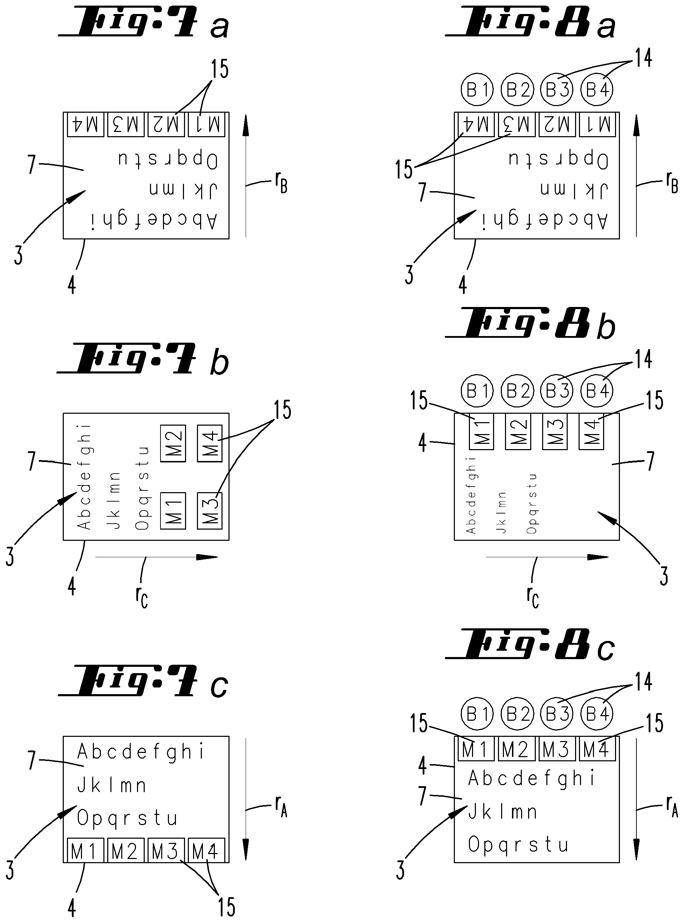

Die Figuren 7 und 8 zeigen unterschiedliche Ausführungsformen von Displays 4 mit abweichender Anordnung der darauf angezeigten Informationen 3.

Die Figuren 7a, 7b und 7c zeigen jeweils ein Display 4, auf welchem einerseits Informationen 3 in Textform dargestellt sind, und andererseits Bedienelemente 15. Die Bedienelemente 15 sind auf dem Display 4 nach der Art von Tastflächen dargestellt, auf welche der Nutzer 2 drücken kann, um bspw. eine Menüauswahl zu treffen. Die Bedienelemente 15 sind dabei in einem Randbereich der Darstellungsfläche 7 des Displays 4 angeordnet, nämlich je nach der Darstellungsrichtung r_{A}, r_{B}, r_{C} unterhalb des dargestellten Textes, so dass der Nutzer 2 bei Betätigung eines der Bedienelemente 15 nicht die weiteren auf dem Display 4 angezeigten Informationen 3 mit seiner Hand 6 verdeckt. Die Figuren 7a, 7b und 7c zeigen verschiedene Darstellungsrichtungen r_{B}, rc, r_{A} der Informationen 3, welche zu verschiedenen Positionen des Nutzers 2 relativ zu dem Fahrzeug 1 korrespondieren. Die in Figur 7a dargestellte Darstellungsrichtung r_{B} der Informationen 3 entspricht einer Situation, in welcher sich der Nutzer 2 in der dargestellten Bildebene an dem oberen Seitenrand befindet. Figur 7b entspricht einer Situation, bei welcher sich der Nutzer 2 rechts neben dem Display 4 befindet, und Figur 7c zeigt schließlich eine Situation, bei welcher der Nutzer 2 aus einer Richtung von dem unteren Seitenrand aus auf das Fahrzeug 1 schaut. Die Informationen 3 sind in allen dargestellten Fällen so auf dem Display 4 arrangiert, dass die Bedienelemente 15 stets in Richtung des Nutzers zeigen und sich somit zwischen den übrigen angezeigten Informationen 3, hier Textbestandteilen, und dem Nutzer 2 befinden.

Die Figuren 8a, 8b und 8c zeigen eine weitere Ausführungsform eines Displays 4, welchem separat, außerhalb der Darstellungsfläche 7, Betätigungselemente 14 nach der Art von Tasten zugeordnet sind. Die auf dem Display 4 dargestellten Bedienelemente 15 bilden in diesem Fall Erläuterungen und/oder Beschriftungen für die zugeordneten Betätigungselemente 14, so dass ein Nutzer 2 Informationen darüber erhält, welche Funktionen hinter den Betätigungselementen 14 stehen. Damit die Bedienelemente 15 stets neben den zugeordneten Betätigungselementen 14 verbleiben, auch wenn sich die Orientierung der Informationen 3 auf dem Display 4 ändert, sind die Bedienelemente 15 stets an dem in der dargestellten Bildebene oberen Rand des Displays 4 angeordnet. Jedoch ändert sich die Ausrichtung der auf den Bedienelementen 15 gezeigten Beschriftung, so dass diese der Ausrichtung der weiteren Informationen 3 entspricht, nämlich den jeweiligen Darstellungsrichtungen r_{B} (Figur 8a), rc (Figur 8b) und r_{A} (Figur 8c).

**Liste der Bezugszeichen**

| | | | |
|---|---|---|---|
| 1 | Fahrzeug | r_{A} | Darstellungsrichtung |
| 2 | Nutzer | r_{B} | Darstellungsrichtung |
| 3 | Information | r_{c} | Darstellungsrichtung |
| 4 | Display | r₁ | Blickrichtung |
| 5 | Bilderfassungseinrichtung | r₂ | Blickrichtung |
| 6 | Hand | r₃ | Blickrichtung |
| 7 | Darstellungsfläche | r4 | Bedienrichtung |
| 8 | Seitenlänge | r₅ | Bedienrichtung |
| 9 | Seitenlänge | | |
| 10 | Reinigungselement | d | Durchmesser |
| 11 | Gehäuse | | |
| 12 | Rad | D | Diagonale |
| 13 | Basisstation | | |
| 14 | Betätigungselement | | |
| 15 | Bedienelement | | |

## Patentansprüche

1. Verfahren zum Betrieb eines sich selbsttätig innerhalb einer Umgebung fortbewegenden, unbemannten Fahrzeugs (1), insbesondere eines Reinigungsroboters, wobei das Fahrzeug (1) innerhalb der Umgebung befindliche Hindernisse und/oder Personen detektiert, wobei einem Nutzer (2) Informationen (3) auf einem in Bezug auf eine Darstellungsebene während eines Betriebs des Fahrzeugs (1) üblicherweise horizontal ausgerichteten Display (4) des Fahrzeugs (1) angezeigt werden, wobei bei Detektion einer Anwesenheit eines Nutzers (2) eine räumliche Position des Nutzers (2) relativ zu dem Fahrzeug (1) ermittelt wird, **dadurch gekennzeichnet, dass** eine Orientierung der angezeigten Informationen (3) in Abhängigkeit von der ermittelten räumlichen Position des Nutzers (2) variiert wird, wobei die Darstellung der Informationen (3) auf dem Display (4) vorsorglich angepasst wird, ohne dass es erforderlich ist, dass der Nutzer (2) sich dem Fahrzeug (1) zuwendet oder auf das Fahrzeug (1) blickt, wobei auf dem Display (4) angezeigte Bedienelemente (15) in Abhängigkeit von der räumlichen Position des Nutzers (2) relativ zueinander umgruppiert werden.

2. Verfahren nach Anspruch 1, **dadurch gekennzeichnet, dass** die Anwesenheit des Nutzers (2) mittels einer Bilderfassungseinrichtung (5) detektiert wird.

3. Verfahren nach Anspruch 1 oder 2, **dadurch gekennzeichnet, dass** eine Blickrichtung (r₁, r₂, r₃) des Nutzers (2) mittels eines Gesichtserkennungsverfahrens ermittelt wird.

4. Verfahren nach einem der vorhergehenden Ansprüche, **dadurch gekennzeichnet, dass** eine Bedienrichtung (r₄, r₅), aus welcher der Nutzer (2) das Fahrzeug (1) bedient, detektiert wird.

5. Verfahren nach Anspruch 4, **dadurch gekennzeichnet, dass** eine Orientierung einer an dem Fahrzeug (1) angreifenden Hand (6) des Nutzers (2) detektiert wird.

6. Verfahren nach Anspruch 5, **dadurch gekennzeichnet, dass** die Orientierung der Hand (6) mittels eines kapazitiven Sensors, insbesondere eines kapazitiven Displays (4), und/oder mittels einer Bilderfassungseinrichtung (5) detektiert wird.

7. Verfahren nach einem der vorhergehenden Ansprüche, **dadurch gekennzeichnet, dass** eine von mehreren möglichen Darstellungsrichtungen (r_{A}, r_{B}, rc) des Displays (4) in Abhängigkeit von der ermittelten räumlichen Position des Nutzers (2) gewählt wird.

8. Verfahren nach einem der vorhergehenden Ansprüche, **dadurch gekennzeichnet, dass** mehrere Teilbereiche der auf dem Display (4) angezeigten Informationen (3) in Abhängigkeit von der räumlichen Position des Nutzers (2) relativ zueinander umgruppiert werden.

9. Verfahren nach einem der vorhergehenden Ansprüche, **gekennzeichnet durch** die aufeinanderfolgenden Verfahrensschritte:
- Aufnahme der Umgebung des Fahrzeugs (1) mittels einer Bilderfassungseinrichtung (5),
- Erkennen der Anwesenheit eines Nutzers (2) in der Umgebung des Fahrzeugs (1),
- Bestimmen einer Blickrichtung (r₁) und/oder einer Bedienrichtung (r₂) einer Hand (6) des Nutzers (2),
- Zuordnen der bestimmten Blickrichtung (r₁) und/oder Bedienrichtung (r₂) zu einer Darstellungsrichtung (r_{A}, r_{B}, r_{C}) des Displays (4),
- Darstellen von Informationen mit der Orientierung der zugeordneten Darstellungsrichtung (r_{A}, r_{B}, r_{C}).

10. Sich selbsttätig innerhalb einer Umgebung fortbewegendes, unbemanntes Fahrzeug (1), insbesondere Reinigungsroboter, mit einer Bilderfassungseinrichtung (5) zur Detektion von innerhalb der Umgebung befindlichen Hindernissen und/oder Personen, wobei das Fahrzeug (1) ein in Bezug auf eine Darstellungsebene während eines Betriebs des Fahrzeugs (1) üblicherweise horizontal ausgerichtetes Display (4) zur Anzeige von Informationen (3) aufweist sowie eine Recheneinrichtung, welche eingerichtet ist, bei Detektion einer Anwesenheit eines Nutzers (2) eine räumliche Position des Nutzers (2) relativ zu dem Fahrzeug (1) zu ermitteln, **dadurch gekennzeichnet, dass** die Recheneinrichtung eingerichtet ist, eine Darstellungsrichtung (r_{A}, r_{B}, r_{C}) der auf dem Display (4) angezeigten Informationen (3) in Abhängigkeit von der ermittelten räumlichen Position des Nutzers (2) zu variieren, nämlich bereits vorsorglich anzupassen, ohne dass es erforderlich ist, dass der Nutzer (2) sich dem Fahrzeug (1) zuwendet oder auf das Fahrzeug (1) blickt, wobei auf dem Display (4) angezeigte Bedienelemente (15) in Abhängigkeit von der räumlichen Position des Nutzers (2) relativ zueinander umgruppiert werden.

11. Fahrzeug nach Anspruch 10, **dadurch gekennzeichnet, dass** das Display (4) eine Darstellungsfläche (7) aufweist, deren Seitenlängen (8) mindestens so groß sind wie eine größte mögliche Diagonale (D) der auf dem Display (4) angezeigten Informationen (3), und/oder dass das Display (4) eine runde Darstellungsfläche (7) mit einem Durchmesser (d) aufweist, der mindestens so groß ist wie eine Diagonale (D) der auf dem Display (4) angezeigten Informationen (3).

## Claims

1. Method for operating an unmanned vehicle (1), in particular a cleaning robot, which propels itself within an environment, the vehicle (1) detecting obstacles and/or people located within the environment, information (3) being displayed to a user (2) on a display (4) of the vehicle (1), which display is usually oriented horizontally with respect to a presentation plane during operation of the vehicle (1), and a spatial position of a user (2) relative to the vehicle (1) being determined when the presence of the user (2) is detected, **characterised in that** an orientation of the displayed information (3) is varied on the basis of the determined spatial position of the user (2), the presentation of the information (3) on the display (4) being pre-emptively adapted without it being necessary for the user (2) to turn towards the vehicle (1) or look at the vehicle (1), and it being possible for operating elements (15) displayed on the display (4) to be rearranged relative to one another on the basis of the spatial position of the user (2).

2. Method according to claim 1, **characterised in that** the presence of the user (2) is detected by means of an image acquisition device (5).

3. Method according to either claim 1 or claim 2, **characterised in that** a viewing direction (r₁, r₂, r₃) of the user (2) is determined by means of a facial recognition method.

4. Method according to any of the preceding claims, **characterised in that** an operating direction (r₄, r₅) from which the user (2) operates the vehicle (1) is detected.

5. Method according to claim 4, **characterised in that** an orientation of a hand (6) of the user (2) which grips the vehicle (1) is detected.

6. Method according to claim 5, **characterised in that** the orientation of the hand (6) is detected by means of a capacitive sensor, in particular a capacitive display (4), and/or by means of an image acquisition device (5).

7. Method according to any of the preceding claims, **characterised in that** one of a plurality of possible presentation directions (r_{A}, r_{B}, r_{C}) of the display (4) is selected on the basis of the determined spatial position of the user (2).

8. Method according to any of the preceding claims, **characterised in that** a plurality of sub-segments of the information (3) displayed on the display (4) are rearranged relative to one another on the basis of the spatial position of the user (2).

9. Method according to any of the preceding claims, **characterised by** the successive method steps of:
- recording the environment of the vehicle (1) by means of an image acquisition device (5),
- detecting the presence of a user (2) in the environment of the vehicle (1),
- identifying a viewing direction (r₁) and/or an operating direction (r₂) of a hand (6) of the user (2),
- assigning the identified viewing direction (r₁) and/or operating direction (r₂) to a presentation direction (r_{A}, r_{B}, r_{C}) of the display (4),
- displaying information with the orientation of the assigned presentation direction (r_{A}, r_{B}, r_{C}).

10. Unmanned vehicle (1), in particular a cleaning robot, which propels itself within an environment, comprising an image acquisition device (5) for detecting obstacles and/or people located within the environment, the vehicle (1) having a display (4) for displaying information (3), which display is usually oriented horizontally with respect to a presentation plane during operation of the vehicle (1), and the vehicle also having a computing device which is designed to determine a spatial position of a user (2) relative to the vehicle (1) when the presence of the user (2) is detected, **characterised in that** the computing device is designed to vary a presentation direction (r_{A}, r_{B}, r_{C}) of the information (3) displayed on the display (4) on the basis of the determined spatial position of the user (2), and specifically to pre-emptively adapt said direction without it being necessary for the user (2) to turn towards the vehicle (1) or look at the vehicle (1), and it being possible for operating elements (15) displayed on the display (4) to be rearranged relative to one another on the basis of the spatial position of the user (2).

11. Vehicle according to claim 10, **characterised in that** the display (4) has a presentation surface (7) of which the side lengths (8) are at least as large as the largest possible diagonal (D) of the information (3) displayed on the display (4), and/or **in that** the display (4) has a round presentation surface (7) having a diameter (d) which is at least as large as a diagonal (D) of the information (3) displayed on the display (4).

## Revendications

1. Procédé de fonctionnement d'un véhicule (1) sans conducteur se déplaçant automatiquement dans un environnement, en particulier d'un robot de nettoyage, dans lequel le véhicule (1) détecte des obstacles et/ou des personnes se trouvant dans l'environnement, dans lequel des informations (3) sont affichées à un utilisateur (2) sur un écran (4) du véhicule (1) qui est habituellement orienté horizontalement par rapport à un plan d'affichage pendant un fonctionnement du véhicule (1), dans lequel une position spatiale de l'utilisateur (2) par rapport au véhicule (1) est déterminée lorsqu'est détectée une présence d'un utilisateur (2), **caractérisé en ce qu'**une orientation des informations affichées (3) est modifiée en fonction de la position spatiale déterminée de l'utilisateur (2), la représentation des informations (3) sur l'écran (4) étant adaptée par précaution sans qu'il soit nécessaire que l'utilisateur (2) se tourne vers le véhicule (1) ou regarde le véhicule (1), des éléments de commande (15) affichés sur l'écran (4) étant regroupés autrement les uns par rapport aux autres en fonction de la position spatiale de l'utilisateur (2).

2. Procédé selon la revendication 1, **caractérisé en ce que** la présence de l'utilisateur (2) est détectée au moyen d'un dispositif d'acquisition d'images (5).

3. Procédé selon la revendication 1 ou 2, **caractérisé en ce qu'**une direction du regard (r₁, r₂, r₃) de l'utilisateur (2) est déterminée au moyen d'un procédé de reconnaissance de visage.

4. Procédé selon l'une des revendications précédentes, **caractérisé en ce qu'**on détecte une direction d'utilisation (r₄, r₅) à partir de laquelle l'utilisateur (2) utilise le véhicule (1).

5. Procédé selon la revendication 4, **caractérisé en ce qu'**on détecte une orientation d'une main (6) de l'utilisateur (2) qui vient au contact du véhicule (1).

6. Procédé selon la revendication 5, **caractérisé en ce que** l'orientation de la main (6) est détectée au moyen d'un capteur capacitif, en particulier un écran capacitif (4), et/ou au moyen d'un dispositif d'acquisition d'images (5).

7. Procédé selon l'une des revendications précédentes, **caractérisé en ce qu'**on sélectionne l'une parmi une pluralité de directions d'affichage possibles (r_{A}, r_{B}, r_{C}) de l'écran (4) en fonction de la position spatiale déterminée de l'utilisateur (2).

8. Procédé selon l'une des revendications précédentes, **caractérisé en ce qu'**une pluralité de sous-zones des informations (3) affichées sur l'écran (4) sont regroupées autrement les unes par rapport aux autres en fonction de la position spatiale de l'utilisateur (2).

9. Procédé selon l'une des revendications précédentes, **caractérisé par** les étapes successives du procédé :
- enregistrement de l'environnement du véhicule (1) au moyen d'un dispositif d'acquisition d'images (5),
- reconnaissance de la présence d'un utilisateur (2) dans l'environnement du véhicule (1),
- détermination d'une direction d'observation (r₁) et/ou d'une direction d'utilisation (r₂) d'une main (6) de l'utilisateur (2),
- affectation de la direction d'observation (r₁) et/ou la direction d'utilisation (r₂) déterminée à une direction d'affichage (r_{A}, r_{B}, r_{C}) de l'écran (4),
- affichage d'informations avec l'orientation de la direction d'affichage affectée (r_{A}, r_{B}, r_{C}).

10. Véhicule sans conducteur (1) se déplaçant automatiquement dans un environnement, en particulier un robot de nettoyage, avec un dispositif d'acquisition d'images (5) pour la détection d'obstacles et/ou de personnes se trouvant dans l'environnement, dans lequel le véhicule (1) présente un écran (4) pour l'affichage d'informations (3), qui est habituellement orienté horizontalement par rapport à un plan d'affichage pendant un fonctionnement du véhicule (1), ainsi qu'un dispositif de calcul qui est conçu pour déterminer une position spatiale de l'utilisateur (2) par rapport au véhicule (1) lorsqu'une présence d'un utilisateur (2) est détectée, **caractérisé en ce que** le dispositif de calcul est configuré pour modifier une direction d'affichage (r_{A}, r_{B}, r_{C}) des informations (3) affichées sur l'écran (4) en fonction de la position spatiale déterminée de l'utilisateur (2), à savoir pour déjà l'adapter à titre préventif sans qu'il soit nécessaire que l'utilisateur (2) se tourne vers le véhicule (1) ou regarde le véhicule (1), des éléments de commande (15) affichés sur l'écran (4) étant regroupés autrement les uns par rapport aux autres en fonction de la position spatiale de l'utilisateur (2).

11. Véhicule selon la revendication 10, **caractérisé en ce que** l'écran (4) présente une surface d'affichage (7) dont les longueurs des côtés (8) sont au moins aussi grandes qu'une diagonale (D) la plus grande possible des informations (3) affichées sur l'écran (4), et/ou **en ce que** l'écran (4) présente une surface d'affichage (7) ronde avec un diamètre (d) qui est au moins aussi grand qu'une diagonale (D) des informations (3) affichées sur l'écran (4).
